# EUROPÄISCHE PATENTSCHRIFT

(11) **EP 1 075 364 B1**
(45) Veröffentlichungstag und Bekanntmachung des Hinweises auf die Patenterteilung: **17.10.2001**
(21) Anmeldenummer: 99926268.6
(22) Anmeldetag: 19.04.1999
(51) Int. Cl.: B26D 3/10, B26D 7/26, B29C 37/02, B23Q 1/36

(54) **WERKZEUGAGGREGAT MIT MESSERKOPF**
TOOL UNIT WITH A CUTTING HEAD
MACHINE-OUTIL COMPORTANT UN PORTE-LAMES

(30) Priorität: 25.02.1999 DE 29903312 U
(43) Veröffentlichungstag der Anmeldung: 14.02.2001
(73) Patentinhaber: Prösl, Johanna, 92708 Mantel (DE)
(72) Erfinder: Prösl, Johanna, 92708 Mantel (DE)
(74) Vertreter: Wörz, Volker Alfred
(86) Internationale Anmeldenummer: DE9901167
(87) Internationale Veröffentlichungsnummer: WO0050204

(56) Entgegenhaltungen:
- EP-A- 0 845 440
- WO-A-97/11807
- DE-A- 4 410 762
- DE-U- 9 016 465
- DE-U- 29 710 727
- FR-A- 2 510 029

## Beschreibung

Die Erfindung betrifft ein an einer vorzugsweise in mehreren Ebenen beweglichen Handlingeinheit, z.B. einem Roboter, gesteuerten NC-Achsen oder dgl. befestigbares Werkzeug- aggregat zum Entgraten von Werkstücken aus Kunststoff, Gummi, Aluminium, kaschierten Stoffen, Filz, Holz, Porzellan oder entsprechendem Material, mit einem der zu entgratenden Kontur eines Werkstückes entsprechend geführten Werkzeug, z.B. in Form eines Entgratungsmessers, das an einem um eine zentrische Achse drehbar angeordneten Tragarm mit Hilfe eines Messertragers befestigt ist, und mit je einer auf entgegengesetzten Seiten des Tragarmes angeordneten, einstellbaren Federanordnung, die den Tragarm über einen vorbestimmbaren Winkelweg bzw. Federweg zum Andrücken an die Werkstückkante in beiden Richtungen auslenken und wieder in die Ausgangsposition zurückführen.

Aus dem DE-U-297 10 727 ist ein Aggregat bekannt, dessen Messerkopf einen sehr begrenzten Schwenkbereich hat, an der Messerachse lediglich eine Lagerung im Zentrum aufweist, keine Endpositionierung bzw. keine definierte Nullstellung besitzt, keine radiale Bewegung des Messers ermöglicht, nicht auf andere, z.B. weichere oder härtere Materialien einstellbar ist, und nur das Entgraten von relativ großen Bohrungen bzw. Aussparungen ermöglicht.

Da bei Kunststoff-Formteilen in der Regel der Entgratungsvorgang unmittelbar nach dem Entformen durchzuführen ist, tritt bei derartigen Anordnungen das Problem auf, daß das Werkstück innerhalb einer relativ kurzen Abkühlperiode erheblich schrumpft, so daß die beim Schrumpfen auftretenden Dimensionsänderungen zum Entgraten berücksichtigt werden müssen und das Werkzeugmesser entsprechend flexibel positioniert und geführt werden muß.

Aufgabe der Erfindung ist, einen Werkzeugaggregat-Messerkopf der gattungsgemäßen Art so aus- und weiterzubilden, daß sein Einsatzbereich erweitert und seine Effektivität verbessert wird.

Gemäß der Erfindung wird dies dadurch erreicht, daß
a) unter Federspannung auf entgegengesetzten Seiten des Tragarmes anstehende Druckfedern vorgesehen sind,
b) der Messerträger am Tragarm mittels Kugellagern gelagert ist,
c) eine Arretierung für die Zentrierung des Tragarmes in der Nullstellung am Gehäuse vorgesehen ist, und
d) am Messerträger ein Anschlagstift schwenkbar befestigt ist, der symmetrisch an beiden Enden von Begrenzungs-Federstiften beaufschlagt wird, welche eine begrenzte Drehbewegung des Messerträgers über einen Anpasswinkel des Werkzeuges an das Werkstück erlauben, und
e) das Werkzeug relativ zum Werstück einstellbar ist

Weitere Ausgestaltungen der Erfindung sind Gegenstand der Unteransprüche. Die Erfindung betrifft auch die Verwendung der Vorrichtung gemäß Anspruch 9 und Anspruch 10. Mit einem Werkzeugaggregat-Messerkopf nach der Erfindung wird mit einem einzigen Werkzeugaggregat bzw. Werkzeugmesser und in einem einzigen Arbeitsvorgang das Ausschneiden und Entgraten von Aussparungen, Bohrungen und dergl. an Werkstücken aus Kunststoff, Aluminium, Holz, Gummi, kaschiertem Stoff, Porzellan oder ähnlichem Material erreicht, wobei sowohl große als auch kleine Aussparungen und Bohrungen bis herab zu einem Durchmesser von ca. 3 - 4 mm einwandfrei ausgeschnitten und entgratet werden können. Durch die spezielle Lagerung des Werkzeugs wird der Schneidwinkel automatisch über die Anpresskraft eingestellt, und es wird eine radiale Bewegung bzw. Drehung des Messers über einen kleinen Anpasswinkel erzielt, so daß eine Anpassung für einen optimalen Schneidwinkel selbsttätig erreicht wird. Vorzugsweise erhält das Messer zur Erzielung einer exakten Positionierung einen Anschliff.

Die Druckfedern zu beiden Seiten des Tragarmes sind vorzugsweise so ausgelegt, daß ein relativ langer Federweg zur Verfügung steht; die Federn sind auswechselbar ausgebildet, damit die Ansprech-Charakteristik verändert und der Federdruck in Anpassung an unterschiedliche Einsatzbedingungen variiert werden kann. Aufgrund der balligen bzw. kugelkalottenförmigen Ausgestaltung der Bolzenauflage auf einer Seite des Tragarmes wird in besonders einfacher und zweckmäßiger Weise eine exakte Rückfederung und ein weiches Auslenken des Werkzeuges erreicht, das sich stets einwandfrei der zu entgratenden Kontur des Werkstückes angleicht. Unterstützt wird dieses Angleichen des Werkzeuges bzw. Messers durch die Federdruckstifte, die auf den im Messerträger angeordneten Bolzen einwirken.

Durch die Verwendung eines Kugeldruckstückes oder einer Rastvorrichtung zwischen Gehäuse und Tragarm wird eine Endpositionierung bzw. Nullstellung des Werkzeuges bzw. des Werkzeugträgers mit Hilfe der einstellbaren Federstifte erreicht. Grundsätzlich kann in Verbindung damit oder alternativ am Gehäuse dem Tragarm oder dem Messerträger ein induktionssensor zugeordnet werden, der die Auslenkung des Tragarmes überwacht.

Des weiteren ergibt sich mit dem vorgeschlagenen Werkzeugaggregat eine einfachere Programmierung im Vergleich zu dem bekannten Aggregat.
Das Werkstück kann wahlweise relativ zum Werkzeug beweglich und das Werkstück feststehend angeordnet sein, oder aber das Werkzeug kann relativ zum Werkstück beweglich und das Werkzeug feststehend angeordnet sein. Ein bewegliches Werkstück kann einfach an einem feststehenden Werkzeug, z.B. einem zusätzlich einzusetzenden Werkzeug, wie z.B. einem Fadenfräser oder dgl., vorbeigeführt werden.

Nachstehend wird die Erfindung in Verbindung mit der Zeichnung anhand von Ausführungsbeispieles erläutert. Es zeigt:
Fig. 1 eine Aufsicht auf einen Werkzeug-Messerkopf nach der Erfindung,
Fig. 2 eine Seitenschnittansicht längs der Linie I - I des Werkzeug-Messerkopfes nach Fig. 1,
Fig. 3 eine Seitenschnittansicht längs der Linie II - II des Werkzeug-Messerkopfes nach Fig. 1,
Fig. 4 eine abgeänderte Ausführungsform eines Werkzeug-Messerkopfes in Aufsicht,
Fig. 5 eine Seitenschnittansicht längs der Linie I - I des Werkzeug-Messerkopfes nach Fig. 4, und
Fig. 6 eine Seitenschnittansicht längs der Linie II - II des Werkzeug-Messerkopfes nach Fig. 4.

Ein zylindrisches Gehäuse 1 besteht aus einem Adapterflansch 2 zur Aufnahme durch einen nicht dargestellten Roboter, einem den Adapterflansch aufnehmenden oberen Deckel 3, einem zylindrischen Gehäusemittelteil 4 und einem unteren Deckel 5. Im Gehäuseteil 4 ist ein Schwenk- bzw. Tragarm 6 zentrisch bei 7 gelagert. Der Tragarm 6 besitzt ein Kopfteil 8 mit einem Messerträger 9 für das Werkzeugmesser 10 sowie ein Schaftteil 11, das beidseitig durch Federdruckstücke 12, 12' in eine Null-Position vorgespannt ist. Der Messerträger 9, der eine Klemmvorrichtung 9', z.B. eine Schloßschraube, zum Festlegen des Werkzeugmessers 10 aufweist, ist in einer langlochartigen Ausnehmung 13 im oberen Deckel 3 geführt, die um den Mittelpunkt 7 teilkreisförmig gekrümmt ausgebildet ist, derart, daß der Trägerarm in einem vorgegebenen Winkel von maximal etwa +/- 40° zur Nullposition schwenkbar ausgebildet ist. Die Nullstellung des Tragarmes 6 wird durch einen Initiator 14 bzw. eine mechanische Rastvorrichtung erzielt, die mit einem entsprechenden Gegenelement 14' der Außenfläche des Kopfteiles zusammenwirkt.

Im Kopfteil 8, das im Tragarm 9 kugelgelagert befestigt ist, ist ein Bolzen bzw. Anschlagstift 15 gelagert, der relativ zur Längsachse des Tragarmes kippbar ist und dessen Position durch Begrenzungs-Federdruckstifte 16, 16' unter Federvorspannung steht, wodurch ein Messerausgleich erzielt wird. Die Federdruckstifte 16, 16' stellen Begrenzungs- und Einstellstifte für den Anschlagstift 15 dar, die eine Drehung des Trägarmes 9 und damit der Werkzeugeinspannung sowie des Werkzeuges 10 um einen kleinen Anpasswinkel ermöglichen. Die Federdruckstifte 16, 16' sind einstellbar ausgebildet, so daß die von den Federdruckstiften auf den Anschlagstift 15 ausgeübte Kraft und damit die Anpassung des Schneidwinkels des Werkzeugs variabel vorgenommen werden kann. Anstelle eines derartigen Federdruckstiftes kann ein Druckzylinder vorgesehen sein, der eine exakte, selbsttätige Positionierung vornimmt.

Die Auslenkung des Tragarmes 9 wird durch die Federdruckstifte 12, 12', 19 begrenzt. Die Druckbolzen 18, 18' der Federdruckstifte wirken in entgegengesetzten Richtungen auf die gegenüberliegenden Seitenflächen des Tragarmes 6 ein. Auf einer Seitenfläche ist eine ballige bzw. kugelkalottenförmige Erhebung in Form einer Auflage 20 vorgesehen, die bewirkt, daß eine exakte Rückfederung und ein weiches Auslenken des Werkzeuges gewährleistet ist.

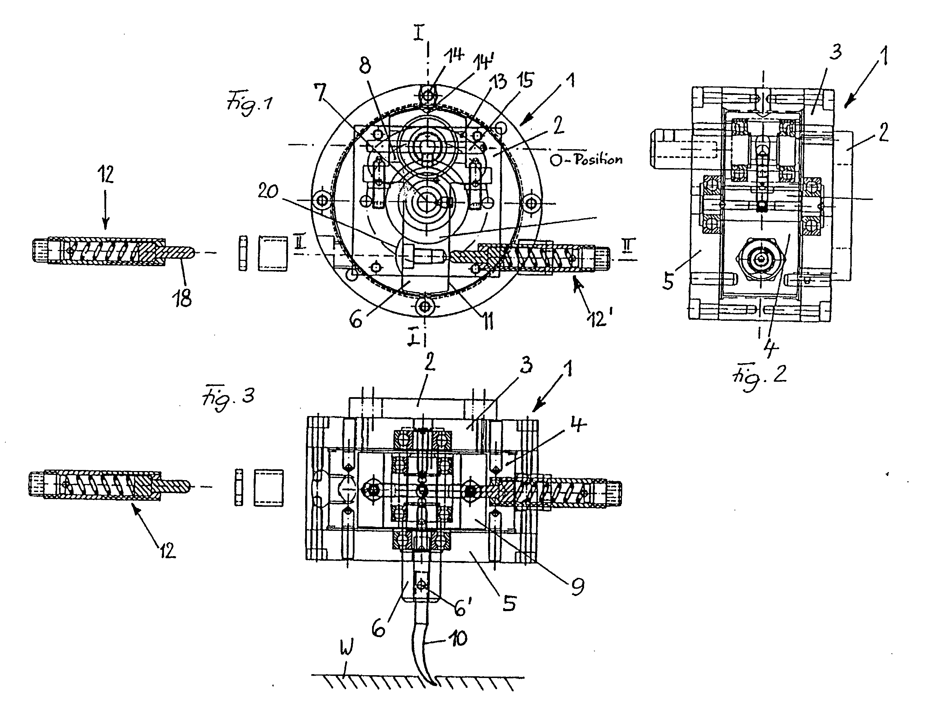

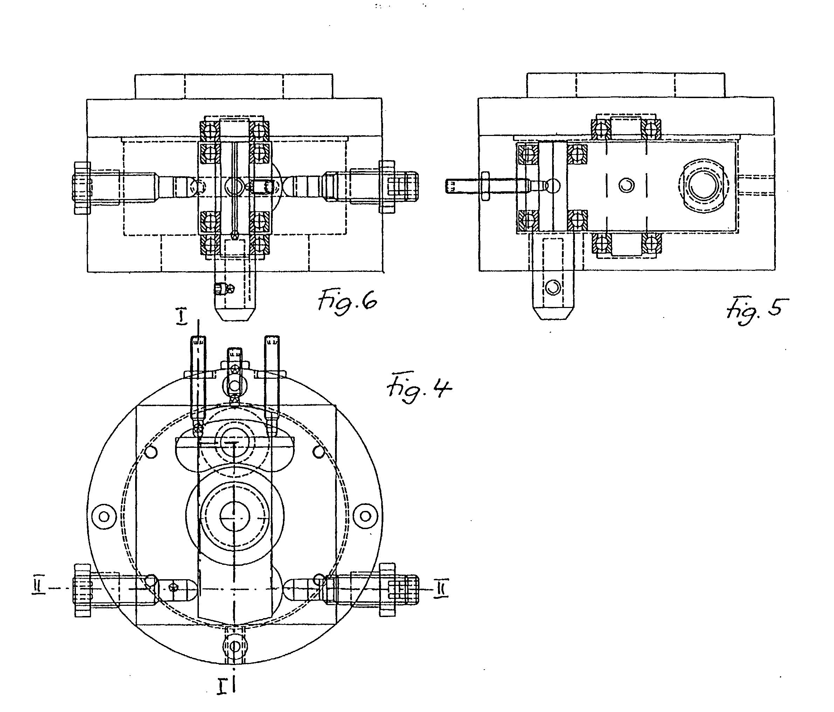

In den Figuren 4, 5 und 6 ist eine weitere Ausführungsform eines Werkzeug-Messerkopfes entsprechend der in den Figuren 1 - 3 dargestellten Anordnung gezeigt.

### Bezugszeichenliste

- 1: Gehäuse
- 2: Adapterflansch
- 3: Deckel
- 4: Gehäusemittelteil
- 5: Deckel
- 6: Tragarm
- 7: Lagerung
- 8: Kopfteil
- 9: Messerträger
- 9': Klemmvorrichtung
- 10: Werkzeugmesser
- 11: Schaftteil
- 12, 12': Federdruckstück
- 13: Langlochausnehmung
- 14: Initiator bzw. Rastvorrichtung
- 14': Gegenelement
- 15: Bolzen/Anschlagstift
- 16, 16': Federdruckstift
- 16a: Druckzylinder
- 17, 17': Flansch
- 18, 18': Druckbolzen
- 19: Federelement
- 20: ballige Auflage

## Patentansprüche

1. Werkzeugaggregat zum Entgraten von Werkstücken aus Kunststoff, Gummi, Aluminium, kaschierten Stoffen, Filz, Holz, Porzellan oder entsprechendem Material, das an einer vorzugsweise in mehreren Ebenen beweglichen Handlingeinheit, z.B. einem Roboter, gesteuerten NC-Achsen oder dgl. befestigbar ist, mit einem der zu entgratenden Kontur eines Werkstückes entsprechend geführten Werkzeug, z.B. in Form eines Entgratungsmessers, das an einem um eine zentrische Achse drehbar angeordneten Tragarm mit Hilfe eines Messerträgers befestigt ist, und mit je einer auf entgegengesetzten Seiten des Tragarmes angeordneten, einstellbaren Federanordnung, die den Tragarm über einen vorbestimmbaren Winkelweg bzw. Federweg zum Andrücken an die Werkstückkante in beiden Richtungen auslenken und wieder in die Ausgangsposition zurückführen,
**dadurch gekennzeichnet, daß**
a) unter Federspannung auf entgegengesetzten Seiten des Tragarmes (6) anstehende Druckfedern (12, 12') vorgesehen sind,
b) der Messerträger (9) am Tragarm (6) mittels Kugellagern gelagert ist,
c) eine Arretierung (14, 14') für die Zentrierung des Tragarmes in der Nullstellung am Gehäuse (1) vorgesehen ist, und
d) am Messerträger (9) ein Anschlagstift (15) schwenkbar befestigt ist, der symmetrisch an beiden Enden von Begrenzungs-Federstiften beaufschlagt wird, welche eine begrenzte Drehbewegung des Messerträgers (9) über einen Anpasswinkel des Werkzeuges an das Werkstück erlauben, und
e) Werkzeug (10) und Werkstück (W) relativ zueinander einstellbar sind.

2. Werkzeugaggregat nach Anspruch 1, **dadurch gekennzeichnet, daß** der Tragarm (6) zumindest auf einer Seite eine ballige bzw. kugelkalottenförmige Erhebung (19) als Auflage aufweist, mit der ein Federdruckstück (12, 12') in Eingriff steht.

3. Werkzeugaggregat nach Anspruch 1, 2 **dadurch gekennzeichnet, daß** die an dem Tragarm (6) angreifenden Druckfedern (19), die die Druckstücke (12, 12') gegen den Tragarm (6) vorspannen, auswechselbar und einstellbar ausgebildet sind.

4. Werkzeugaggregat nach einem der Ansprüche 1 - 3, **dadurch gekennzeichnet, daß**. die Druckfedern (19) für einen langen Federweg ausgelegt sind.

5. Werkzeugaggregat nach einem der Ansprüche 1 - 4, **dadurch gekennzeichnet, daß** die Federkraft der Druckfedern (19) durch Stellschrauben einstellbar ist.

6. Werkzeugaggregat nach einem der Ansprüche 1 - 5, **dadurch gekennzeichnet, daß** zwischen Gehäuse und der dem Gehäuse zugewandten Stirnseite des Tragarmes eine Arretierung bzw. ein Kugeldruckstück zur Festlegung der Nullposition des Werkzeugträgers vorgesehen ist.

7. Werkzeugaggregat nach einem der Ansprüche 1 - 6, **dadurch gekennzeichnet, daß** ein induktiver Sensor zur Überwachung der Auslenkung des Tragarmes vorgesehen ist.

8. Werkzeugaggregat nach einem der Ansprüche 1 - 7, **dadurch gekennzeichnet, daß** zumindest einer der Federbegrenzungsstifte als Druckzylinder ausgebildet ist.

9. Verwendung eines Werkzeugaggregates nach einem der Ansprüche 1 - 8, **dadurch gekennzeichnet, daß** das Werkstück feststehend und das Werkzeug relativ zum Werkstück beweglich angeordnet ist.

10. Verwendung eine Werkzeugaggregates nach einem der Ansprüche 1 - 8, **dadurch gekennzeichnet, daß** das Werkzeug feststehend und das Werkstück relativ zum Werkzeug beweglich angeordnet ist.

## Claims

1. Tool assembly for deburring work pieces made of synthetic, rubber, aluminium, laminated materials, felt, wood, porcelain or corresponding material, which can be fixed to handling unit, e.g. a robot, controlled N/C axes or the like, which preferably can be moved in several planes, with a tool which is guided in accordance with the contour which is to be deburred on a work piece, e.g. in the form of a deburring blade, which with the aid of a blade holder can be fixed on a support arm arranged so as to be rotatable around a central axis, and with adjustable spring arrangements which are arranged one on each of the opposite sides of the support arm, and which move the support arm in both directions over a predetermined angle path or spring excursion to press against the work piece edge and then return it to the starting position once more,
**characterised in that**
a) pressure springs (12, 12') are provided which are located, under spring tension, on opposite sides of the support arm (6),
b) the blade holder (9) on the support arm (6) is borne by means of ball bearings,
c) a detent (14, 14') is provided for centring the support arm in the zero position on the housing (1), and
d) fixed to the blade holder (9), in a pivoting manner, is a stop pin (15) which is symmetrically pressurised at both ends by limiting spring pins, which permit a limited rotating movement of the blade holder (9) over an adaptation angle of the tool on the work piece, and
e) tool (10) and work piece (W) which are adjustable relative to one another.

2. Tool assembly in accordance with claim 1, **characterised in that** the support arm (6), at least on one side, has a crowned or universal ball joint-shaped elevation (19) as a resting surface, with which a spring pressure piece (12, 12') is engaged.

3. Tool assembly in accordance with claim 1, 2 **characterised in that** the pressure springs (19) which engage on the support arm (6) and which pre-load the pressure pieces (12, 12') against the support arm (6) are designed to be replaceable and adjustable.

4. Tool assembly in accordance with one of the claims 1-3, **characterised in that** the pressure springs (19) are designed for a long spring excursion.

5. Tool assembly in accordance with one of the claims 1-4, **characterised in that** the spring force of the pressure springs (19) can be set by means of adjusting screws.

6. Tool assembly in accordance with one of the claims 1-5, **characterised in that** a detent or a ball thrust pieces for fixing the zero position of the tool carrier is provided between the housing and frontal face of the support arm facing the housing.

7. Tool assembly in accordance with one of the claims 1-6, **characterised in that** an inductive sensor is provided for monitoring the excursion of the support arm.

8. Tool assembly in accordance with one of the claims 1-7, **characterised in that** at least one of the spring limiter pins is designed as a pressure cylinder.

9. Use of a tool assembly in accordance with one of the claims 1-8, **characterised in that** the work piece is static and the tool is arranged so as to be movable relative to the work piece.

10. Use of a tool assembly in accordance with one of the claims 1-8, **characterised in that** the tool is static and the work piece is arranged so as to be movable relative to the tool.

## Revendications

1. Machine-outil destinée à l'ébavurage de pièces usinées en matière plastique, caoutchouc, aluminium, matières contrecollées, feutre, bois, porcelaine ou matière correspondante, qui peut être fixée à une unité de manipulation se déplaçant, de préférence, dans plusieurs plans, qui comporte un outil guidé en correspondance avec le contour à ébavurer d'une pièce usinée et réalisée par exemple sous la forme d'une lame d'ébavurage fixée, au moyen d'un support de lame, sur un bras porteur disposé à rotation autour d'un axe central et un dispositif réglable à ressort disposé, à chaque fois, sur un des côtés opposés du bras porteur et qui dévie le bras porteur dans les deux sens sur une course angulaire ou une course de ressort qui peut être prédéterminée pour le presser sur les arêtes de la pièce usinée et le ramène dans la position initiale,
**caractérisée en ce que** :
a) on prévoit des ressorts de pression (12, 12') s'appuyant avec une tension de ressort sur des côtés opposés du bras porteur (6),
b) le support de lame (9) est monté sur le bras porteur (6) au moyen de roulements à billes,
c) on prévoit un dispositif d'arrêt (14, 14') pour le centrage du bras porteur (6) dans la position zéro sur le châssis
d) sur le support de lame (9), on fixe, avec possibilité de pivotement, une tige de butée (15) qui. de manière symétrique sur ses deux extrémités, est soumise à l'action de tiges de ressort de limitation qui permettent un mouvement de rotation limité du support de lame (9) sur un angle d'adaptation de l'outil sur la pièce usinée, et
e) l'outil (10) et la pièce usinée (W) peuvent être réglés relativement l'un par rapport à l'autre.

2. Machine-outil selon la revendication 1, **caractérisée en ce que** le bras porteur (B) comporte, au moins sur un côtó, une bosse (20) bombée ou en forme de calotte constituant un appui et dans laquelle s'accroche une pièce de pression de ressort (12, 12').

3. Machine-outil selon la revendication 1 ou 2, **caractérisée en ce que** les ressorts de pression (19) qui s'accrochent sur le bras porteur (6) et qui réalisent une contrainte préalable des pièces de pression (12, 12') contre le bras porteur (6), sont réalisés de manière à être interchangeables et réglables.

4. Machine-outil selon l'une quelconque des revendications 1 à 3, **caractérisée en ce que** les ressorts de pression (19) sont prévus pour une longue course de ressort.

5. Machine-outil selon l'une quelconque des revendications 1 à 4, **caractérisée en ce que** la force élastique des ressorts de pression (19) peut être réglée au moyen de vis de réglage.

6. Machine-outil selon l'une quelconque des revendications 1 à 5, **caractérisée en ce que**, entre le châssis et la face frontale du bras porteur dirigée vers le châssis, on prévoit un dispositif d'arrêt ou une pièce de pression à bille pour la fixation de la position zéro du support d'outil.

7. Machine-outil solon l'une quelconque des revendications 1 à 6, **caractérisée en ce que** l'on prévoit un capteur inductif pour la surveillance de la déviation du bras porteur.

8. Machine-outil selon l'une quelconque des revendications 1 à 7, **caractérisée en ce qu'**au moins une des tiges de limitation du ressort est réalisée sous la forme d'un vérin.

9. Utilisation d'une machine-outil selon l'une quelconque des revendications 1 à 8, **caractérisée en ce que** la pièce usinée est fixe et que l'outil est disposé de manière relativement mobile par rapport à la pièce usinée.

10. Utilisation d'une machine-outil selon l'une quelconque des revendications 1 à 8, **caractérisée en ce que** l'outil est fixe et que la pièce usinée est disposée de manière relativement mobile par rapport à l'outil.
